# EUROPÄISCHE PATENTSCHRIFT

(11) **EP 0 424 624 B1**
(45) Veröffentlichungstag und Bekanntmachung des Hinweises auf die Patenterteilung: **19.04.1995**
(21) Anmeldenummer: 90115770.1
(22) Anmeldetag: 17.08.1990
(51) Int. Cl.: B29C 45/13, B29C 45/00, B29C 45/56

(54) **Spritzgiessform für Spritzgussteile aus plastifizierbarem Material, insbesondere aus plastifizierbaren Flüssigkristall-Polymeren**
Injection mould for pieces injected from plastifiable material, in particular from plastifiable liquid crystal polymers
Moule d'injection pour des pièces injectées en matière plastifiable, notamment en polymères à cristaux liquides plastifiables

(30) Priorität: 20.10.1989 DE 3934115
(43) Veröffentlichungstag der Anmeldung: 02.05.1991
(73) Patentinhaber: Ferromatik Milacron Maschinenbau GmbH, D-79364 Malterdingen (DE)
(72) Erfinder: Gutjahr, Lothar, D-7831 Malterdingen (DE)
(74) Vertreter: Röther, Peter, Dipl.-Phys.

(56) Entgegenhaltungen:
- EP-A- 0 188 120
- DE-A- 3 734 256
- DE-A- 3 810 954
- KUNSTSTOFFE. Bd. 79, Nr. 11, November 1989, MUNCHEN DE Seiten 1108 - 1112; GUTJAHR, BECKER: 'Herstellen technischer Formteile mit dem Gegentakt-Spritzgiessverfahren'
- PATENT ABSTRACTS OF JAPAN vol. 7, no. 265 (M-258)(1410) 25. November 1983& JP-A-58 145 428 (RICOH)

## Beschreibung

Die Erfindung betrifft eine Spritzgießform gemäß den Merkmalen des Oberbegriffs des Patentanspruchs 1.

Unter darin zu verarbeitendem plastifizierbarem Material sind im Sinne der Erfindung die üblichen plastifizierbaren Thermoplaste, weiterhin granulierte, zu Polyurethan ausreagierte Gemische aus Isocyanat und Polyol, ungebrannte Keramikmassen mit zugesetzten organischen Gleitmitteln, Elastomere, gefülltes Kunststoffmaterial mit einem Zusatz von Glasfasern, Kohlefasern, Metallpulver usw. zu verstehen.

Beim Spritzgießen von Spritzgießteilen wurde bisher im allgemeinen plastifiziertes Material über eine Angußbohrung in das Formnest einer geschlossenen Spritzgießform eingespritzt und der beim Abkühlen des Spritzgießteiles im allgemeinen nicht vernachlässigbare Schwund durch weitere Zufuhr an plastifiziertem Material kompensiert.

Nach diesem allgemeinen Prinzip werden auch Spritzgießteile aus verschiedenem Kunststoffmaterial hergestellt (Mehrkomponentenspritzen).

Da stets plastifiziertes Material - abgesehen von der Angußbohrung - in ein in sich geschlossenes Formnest gespritzt wird, sind je nach der Geometrie, den Abmessungen und der Wanddicke des Spritzgießteiles erhebliche Spritzdrücke zum Herstellen einwandfreier Spritzgießteile und auch entsprechend hohe Formzuhaltedrücke erforderlich, um ein Aufreißen der Spritzgießform zu verhindern.

Im wesentlichen wurde bisher darauf geachtet, den Ablauf des Einspritzvorgangs zur Herstellung einwandfreier maßhaltiger bzw. maßgenauer Spritzgießteile zu steuern bzw. zu regeln.

Ein gezieltes Einströmen des plastifizierten Materials in das Formnest zur Erzeugung eines vorgegebenen Verlaufs z.B. der neutralen Faser im Sinne einer optimalen mechanischen Festigkeit bzw. Belastbarkeit der Spritzgießteile ist jedoch durch diese Maßnahmen nicht möglich und auch nicht beabsichtigt.

Es ist bekannt (siehe europäische Patentanmeldung EP-A-0 205 710), beim Herstellen von Spritzgießteilen wie Stoßstangen für Kraftfahrzeuge usw. Spritzgießformen mit mehreren Angußbohrungen einzusetzen und für jede Angußbohrung jeweils ein Plastifizier- und Einspritzaggregat vorzusehen, um während des Einspritzvorgangs ein sicheres Füllen der Spritzgießform und weiterhin ein Erstarren des plastifizierten Materials in den Angußbohrungen zu vermeiden.

Es ist weiterhin bekannt (siehe europäische Patentanmeldung EP-A-0 166 038) Spritzgießteile aus plastifizierten Flüssigkristall-Polymeren herzustellen, deren Molekülketten sich in die Strömungsrichtung des in die Spritzgießform eingespritzten plastifizierten Materials ausrichten. Zu diesem Zweck kommen Formen mit zwei Angußbohrungen zum Einsatz, die mit einem Plastifizier- und Einspritzaggregat ein geschlossenes System bilden, so daß beim Einspritzen des plastifizierten Materials in das Formnest dieses nach Füllen der Spritzgießform zum Teil in die zweite Angußbohrung strömt und durch die laminare Strömung im Formnest die Molekülketten ausgerichtet werden.

Aus anderen Gebieten der Technik, zum Beispiel bei Schmiedestücken, ist es bekannt, durch die entsprechende Vorgabe des Faserverlaufs eine optimale Festigkeit bzw. Belastbarkeit der Werkstücke zu erzielen.

Eine Weiterentwicklung des letztgenannten Verfahrens und der zu seiner Durchführung erforderlichen Vorrichtung in die vorgenannte Richtung wird in der Druckschrift EP-A-0 188 120 offenbart. Hier wird das plastifizierte Kunststoffmaterial aus einem einzigen Plastifizier- und Einspritzaggregat zunächst in einen zwischen diesem und der Spritzgießform angeordneten Verteilerblock eingespeist, der mindestens zwei von seiner Eingangsöffnung abgehende und zu je einer auf bekannte Weise betätigbaren Kolben-Zylinder-Anordnung führende Eingangskanäle und je einen von jeder Kolben-Zylinder-Anordnung zu einem Angußkanal in der Spritzgießform führenden Ausgangskanal aufweist, wobei alle Ausgangskanäle in ein- und dasselbe Formnest münden. Die Gesamtvorrichtung arbeitet so, daß zunächst eine Kolben-Zylinder-Anordnung einen Durchgang vom Plastifizier- und Einspritzaggregat über ihren zugehörigen Angußkanal in das Formnest und von diesem in den durch die andere Kolben-Zylinder-Anordnung gegen das Plastifizier- und Einspritzaggregat abgesperrten weiteren Angußkanal freigibt, so daß der gesamte vorgenannte Raum von dem Plastifizier- und Einspritzaggregat vollständig mit plastifiziertem Kunststoffmaterial gefüllt werden kann. Dann werden die Kolben-Zylinder-Anordnungen derart gegenphasig betätigt, daß die gesamte zwischen den beiden Kolben befindliche Menge des Kunststoffmaterials - d. h. auch diejenige im Formnest - unter mehrfachem Richtungswechsel im vorgenannten Raum hin- und hergeschoben wird, wobei eine deutliche Ausrichtung der Moleküle in der Schwingungsrichtung auftritt. Bei dieser gegenphasigen Kolbenbewegung wird bereits ein Teil des möglichen Materialschwundes kompensiert; für eine endgültige Kompensation auftretenden Materialschwundes werden die Kolben-Zylinder-Anordnungen abschließend auf gleichphasigen Betrieb umgeschaltet.

Die Ursache der vorgenannten - gewollten - Ausrichtung der Moleküle sind die bei der hin- und hergehenden Schwingungsbewegung des Kunststoffmaterials in diesem - d. h. zwischen den in ihm enthaltenen Molekülen - auftretenden Scherkräfte, die dann allerdings auch zu einer merklichen Erwärmung des Kunststoffmaterials innerhalb der Vorrichtung führen, die ihrerseits für das Abbinden des zu erzeugenden Kunststoffartikels von der Spritzgießform wieder abgeführt werden muß. Dies verzögert das Abbinden der erzeugten Kunststoffartikel ganz erheblich, wofür in der in Rede stehenden Druckschrift Zeiten in der Größenordnung von 400 Sekunden angegeben werden, die für die wirtschaftliche Auswertung des offenbarten Verfahrens nur in Ausnahmefällen akzeptabel sein können. Abgesehen davon, daß der Verteilerblock einen zusätzlichen apparativen Aufwand erfordert, der insbesondere in der Notwendigkeit zweier zusätzlicher Kolben-Zylinder-Anordnungen mit einer aufwendigen Steuerung begründet ist.

Aus der nachveröffentlichten deutschen Patentanmeldung P 38 10 954.9-16 (siehe DE-A-3 810 954) ist ein Verfahren zum Spritzgießen von Spritzgießteilen aus plastifizierbarem Material, insbesondere aus plastifizierbaren Flüssigkristall-Polymeren bekannt. Das plastifizierte Material wird in eine geschlossene Spritzgießform mit mindestens zwei Angußbohrungen mit jeweils einem zugeordneten Plastifizier- und Einspritzaggregat eingespritzt und gegebenenfalls ein auftretender Schwund der sich abkühlenden Spritzgießteile durch weitere Materialzufuhr kompensiert, wobei zum Füllen des Formnestes das plastifizierte Material durch das eine Plastifizier- und Einspritzaggregat über die eine Angußbohrung in das Formnest strömt und teilweise über die andere Angußbohrung in Richtung zum anderen Plastifizier- und Einspritzaggregat weiter strömt. Zur Vorgabe eines gezielten Faser- bzw. Spannungsverlaufs führen während des Füllens des Formnestes wechselweise die beiden Plastifizier- und Einspritzaggregate dem Formnest plastifiziertes Material zu.

Das plastifizierte Material strömt durch die eine Angußbohrung in das Formnest ein und strömt, während es das Formnest vollständig ausfüllt, durch die andere Angußbohrung in Richtung zum anderen Plastifizier- und Einspritzaggregat. Hierbei werden die auf die Plastifizier- und Einspritzschnecken wirkenden hydraulischen Drücke so vorgegeben, daß das plastifizierte Material unter einem vorgegebenen Druck steht. Während sich die eine Plastifizier- und Einspritzschnecke in Richtung auf ihre zugeordnete Angußbohrung bewegt, bewegt sich die andere Plastifizier- und Einspritzschnecke von ihrer zugeordneten Angußbohrung weg, wobei sie zusätzlich granuliertes Material plastifizieren kann. Nach Füllen der Form wird die weitere axiale Bewegung der beiden Plastifizier- und Einspritzschnecken gestoppt und an eine oder beide Plastifizier- und Einspritzschnecken ein entsprechender Druck angelegt, unter dem das Spritzgießteil gegebenenfalls unter Kompensation des Schwundes abkühlt.

Gleichzeitig wird der Aufbau des üblichen hohen Forminnendruckes beim Füllen des Formnestes vermieden, so daß auch die bisher üblichen hohen Formzuhaltedrücke nicht mehr erforderlich sind.

Ein besonderer Vorteil besteht darin, daß durch die gezielte Anordnung der beiden Angußbohrungen in Bezug auf die Geometrie und die Abmessungen des Formnestes ein gezielter Strömungsverlauf des plastifizierten Materials im Formnest erreicht wird und der Verlauf der Fasern, insbesondere derjenige der neutralen Faser, vorgebbar ist.

Ein weiterer wesentlicher Vorteil besteht darin, daß lange Moleküle bzw. Molekülketten sowie Glasfasern, Kohlefasern usw. sich in Strömungsrichtung orientieren und dadurch die Festigkeit erheblich heraufsetzen.

Das wechselweise Zuführen kann in der Weise erfolgen, daß die beiden Plastifizier- und Einspritzaggregate dem Formnest die gesamte erforderliche Masse für die Herstellung eines Spritzgießteiles in Teilmengen zuführen, wobei sich die Strömungsrichtung jedesmal umkehrt.

Insbesondere bei langen Molekülen bzw. Molekülketten stellt sich ohne weiteres ein Ausrichten in Fließrichtung durch die mehrmalige Richtungsumkehr der Strömungsrichtung ein.

Wird nach dem Füllen des Formnestes durch die beiden Plastifizier- und Einspritzaggregate das plastifizierte Material hin und her geschoben, wobei das Hin- und Herschieben des plastifizierten Materials in Abhängigkeit von der Abkühlgeschwindigkeit der Spritzgießteile erfolgen kann, so erfolgt aufgrund des sich abkühlenden Spritzgießteils das Abkühlen von der Forminnenwandung her in Richtung zum Inneren des Spritzgießteils. Es bilden sich in diesem Fall Scherzonen aus, in denen die Orientierung der Moleküle bzw. Molekülketten erfolgt, so daß im Idealfall eine Orientierung der Moleküle und der gezielte Verlauf der Fasern über den gesamten Querschnitt erreicht wird.

Es können generell die Intervalle für das Hin- und Herschieben des plastifizierten Materials durch Pausen voneinander getrennt werden, so daß die Geschwindigkeit des hin- und herströmenden Materials in weiten Grenzen aufgrund der Massenträgheit des strömenden Materials im Hinblick auf eine überaschend optimale Orientierung der Moleküle bzw. Molekülketten steuerbar ist.

Prinzipiell ist es möglich, die beiden Angußbohrungen einer geschlossenen Spritzgießform diametral einander gegenüberliegend anzuordnen, so daß das Formnest gewissermaßen während des Strömens des plastifizierten Materials die Funktion einer Angußbohrung hat.

Diese Anordnung ist vor allem vorteilhaft bei Spritzgießteilen mit Zylinder- bzw. Rotationssymetrie.

Generell kann die Anordnung der Angußbohrungen zueinander beliebig erfolgen, und zwar unter Berücksichtigung der Geometrie des Formnestes, damit der entsprechend vorgegebene Faser- bzw. Spannungsverlauf im Spritzgießteil erzielt wird.

So ist es zum Beispiel vorteilhaft, wenn sich beim Spritzen von L-förmigen Profilen die Achsen der Angußbohrungen unter einem Winkel von 90° schneiden, so daß sich beim Spritzgießen der L-förmigen Profile ein L-förmiger Verlauf der Fasern einstellt.

Es kann insbesondere über mindestens ein weiteres Paar von Angußbohrungen abwechselnd zum ersten Paar der Angußbohrungen plastifiziertes Material zur Änderung der Strömungsrichtung im Formnest zugeführt werden, so daß durch diese Maßnahmen das Spritzgießteil in zwei Schichten gespritzt wird.

Durch die entsprechende Anordnung und Ausrichtung des zweiten Paares der Angußbohrungen ist es hierbei möglich, den Faserverlauf bzw. Spannungsverlauf der zweiten Schicht so vorzugeben, daß sie zur Faserrichtung bzw. Spannungsrichtung der ersten Schicht um 90° versetzt wird.

Im Prinzip ist es möglich, durch eine entsprechende Anordnung von weiteren Paaren von Angußbohrungen nach dem Prinzip der Vielschichtplatte Spritzgießteile aus mehreren Schichten zu Spritzen, wobei der Faserverlauf der aufeinanderfolgenden Schichten jeweils zueinander versetzt ist.

Prinzipiell ist es auch möglich, in aufeinanderfolgenden Ebenen die Angußbohrungen paarweise und abwechselnd in verschiedenen Richtungen zu orientieren und dann in aufeinanderfolgenden Schichten das Spritzgießteil zu spritzen.

Weiterhin kann während des Strömens des plastifizierten Materials in Richtung zu dem einen oder anderen Plastifizier- und Einspritzaggregat das Formnest entlüftet werden. Das in das Formnest einströmende plastifizierte und in Richtung zum anderen Plastifizier- und Einspritzaggregat weiterströmende plastifizierte Material schiebt die in dem Formnest befindliche Luft vor sich her und gibt sie auf ihrem Strömungswege an einer geeigneten Stelle über ein Ventil an die Umgebung ab.

Im Prinzip kommen im einfachsten Fall mindestens zwei Plastifizier- und Einspritzaggregate und eine Spritzgießform mit mindestens zwei Angußbohrungen zum Einsatz, wobei zum Spritzen der Spritzgießteile das Formnest der Spritzgießform über die Angußbohrungen mit den Plastifizier- und Einspritzaggregaten in kommunizierender Verbindung steht.

Unter kommunizierender Verbindung ist zu verstehen, daß das plastifizierte Material von beiden Plastifizier- und Einspritzschnecken abwechselnd in das Formnest injiziert wird und ebenfalls abwechselnd gesteuert in Richtung zum einen oder anderen Plastifizier- und Einspritzaggregat fließt. Durch diese Maßnahmen wird erreicht, daß das plastifzierte Material mit einem von den Plastifizier- und Einspritzschnecken ausgeübten vorgegebenen Differenzdruck dem Formnest zugeführt wird.

Der Erfindung liegt die Aufgabe zugrunde, eine Spritzgießform zum Durchführen dieses Verfahrens zu schaffen, die einfach im Aufbau ist und die ohne weiteres anstelle der bisher bekannten Spritzgießformen auf die Formaufspannplatten von Spritzgießmaschinen aufspannbar ist.

Diese Aufgabe wird erfindungsgemäß mittels der Merkmale des kennzeichnenden Teils des Patentanspruchs 1 gelöst.

Weitere Ausbildungen der Erfindung sind in den abhängigen Ansprüchen beschrieben.

Dabei erweist es sich als besonders vorteilhaft, daß zwischen den Angußbohrungen und den weiteren Bohrungen ein Heißkanalblock mit mindestens zwei Bohrungen angeordnet ist, wobei diese Bohrungen einerseits jeweils mit einer der Angußbohrungen in Verbindung stehen und andererseits in mindestens eine der weiteren Bohrungen münden und dazwischen durch eine Ventilanordnung mit Einwegventilen geführt sind, die eine wechselweise von einem der Plastifizier- und Einspritzaggregate zum anderen verlaufende Strömung des plastifizierten thermoplastischen Materials erzeugt, weil sich auf diese Weise durch geeignete Anordnung der Bohrungen und Einwegventile zwischen den weiteren Angußbohrungen mit minimalem Schaltungsaufwand jedes gewünschte Fließmuster des plastifizierbaren Materials im Formnest zwischen den Plastifizier- und Einspritzaggregaten erzeugen läßt, wobei diese schaltungstechnisch einfache Anordnung aus Bohrungen und Einwegventilen außerdem vorteilhafterweise in einem leicht auswechselbaren Bestandteil der Spritzgießform - nämlich dem Heißkanalblock - untergebracht ist, der darüber hinaus sicherstellt, daß das plastifizierbare Material weder während des wechselweisen Materialflusses von einem Plastifizier- und Einspritzaggregat zum anderen noch in den Pausen zwischen den Spritzgießzyklen in den Bohrungen und Einwegventilen erstarrt und den weiteren Durchgang versperrt.

Bei einem weiteren Ausführungsbeispiel der erfindungsgemäßen Spritzgießform erweist es sich als vorteilhaft, daß der Heißkanalblock einen ersten Abzweig mit der einen, in die eine Angußbohrung mündenden Bohrung und einen zweiten Abzweig mit der anderen, in die andere Angußbohrung mündenden Bohrung aufweist, wobei die Abzweige über Bohrungen jeweils sowohl mit dem ersten als auch mit dem zweiten Plastifizier- und Einspritzaggregat in Verbindung stehen und die Einwegventile in diesen Bohrungen angeordnet sind, weil damit beispielsweise einerseits der gewünschte wechselweise Materialfluß von einem Plastifizier- und Einspritzaggregat zum anderen sichergestellt und andererseits ein stets gleichgerichteter Materialfluß durch das Formnest herbeigeführt werden kann, indem die Bohrungen und Einwegventile nach der Art einer elektrischen Graetz-Gleichrichterschaltung angeordnet und betätigt werden.

Bei einer weiteren Ausgestaltung der erfindungsgemäßen Spritzgießform ist es vorteilhaft, daß die Spritzgießform zwei Paare von Angußbohrungen aufweist, deren beide Achsen in zwei parallelen Ebenen angeordnet sind und in einer gemeinsamen Projektionsebene untereinander einen vorgegebenen Winkel einschließen, daß der Heißkanalblock Bohrungen aufweist und daß diese Bohrungen einerseits in die Angußbohrungen und andererseits in die weiteren Bohrungen münden, da mit dieser Anordnung auf einfache Weise mehrschichtige Gegenstände aus plastifizierbarem Material mit unterschiedlichen Faserorientierungen in den einzelnen Schichten - d.h. mit einer sperrholzähnlichen Struktur - hergestellt werden könnnen, was vorteilhafterweise noch unterstützt wird, wenn bei mindestens einer der beiden Formhälften die zur Formteilbildung notwendige Kontur mittels einer - vorzugsweise hydraulisch betätigten - Kolben-Zylinder-Anordnung auf einen minimalen Abstand zur anderen Formhälfte verfahrbar ist und der die Formteilkontur tragende Kern in vorgegebener Weise kontinuierlich aus dieser Anfangslage zurückfahrbar ist, wobei mehrfach Fließrichtungswechsel des thermoplastischen Materials durchführbar sind.

Als besonders vorteilhaft erweist sich dabei eine Ausführungsform der erfindungsgemäßen Spritzgießform, bei der die Querschnittsfläche des die Formkontur tragenden verfahrbaren Kerns senkrecht zur Schließrichtung der Spritzgießform größer ist als die für die Formteilbildung notwendige Kontur und die Konturen für die Angußkanäle beinhaltet, weil auf diese Weise die Angußkanäle mit der wachsenden Schichtdicke ihre jeweils erforderliche Länge entsprechend vergrößern können.

Alle Ausführungsformen der vorgenannten erfindungsgemäßen Spritzgießform haben den Vorteil, daß sie bei einfachem Aufbau ohne weiteres gestatten, bei der Ausbildung der Heißkanalblöcke als Funktionseinheiten vorhandene Spritzgießformen mit weiteren Angußbohrungen zu versehen und mit den Funktionseinheiten die erfindungsgemäßen Spritzgießformen nach dem Baukastenprinzip zu bilden.

Die Erfindung ist in der Zeichnung anhand von Ausführungsbeispielen erläutert.

Es zeigen:
- Fig. 1: den prinzipiellen Aufbau einer Spritzgießform mit dem Heißkanalblock,
- Fig. 2: schematisch das erste Ausführungsbeispiel des Heißkanalblocks mit den Ventilen,
- Fig. 3: schematisch das zweite Ausführungsbeispiel des Heißkanalblocks mit den Ventilen,
- Fig. 4: in Explosionsdarstellung die Spritzgießform und den Heißkanalblock für das erste Ausführungsbeispiel,
- Fig. 5: in Explosionsdarstellung die Spritzgießform und den Heißkanalblock für das zweite Ausführungsbeispiel,
- Fig. 6: ein Ausführungsbeispiel einer Spritzgießform mit wandstärkenveränderlicher Kavität zum Herstellen von sperrholzähnlichen Strukturen.

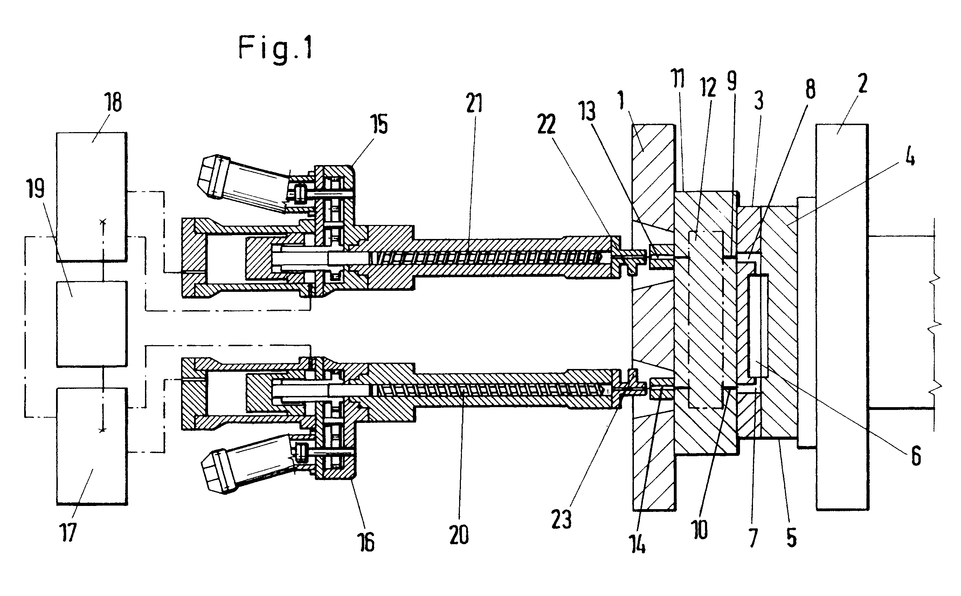

In Fig. 1 sind mit 1 bzw. 2 die feststehende und die auf nicht dargestellten Holmen verschiebbare Formaufspannplatte bezeichnet, auf deren zueinander zeigenden Seiten die Formhälften 3 und 4 der mit 5 bezeichneten Spritzgießform aufgespannt sind.

Die beiden Formhälften begrenzen in Schließstellung der Spritzgießform das Formnest 6.

Die auf der feststehenden Formaufspannplatte 1 aufgespannte Formhälfte 3 weist die beiden Angußbohrungen 7 und 8 auf, die in die Bohrungen 9 bzw. 10 des Heißkanalblocks 11 münden.

Der Heißkanalblock 11 ist zwischen der Formhälfte 3 und der feststehenden Formaufspannplatte 1 angeordnet, er bildet somit mit der Formhälfte 3 eine auf der feststehenden Formaufspannplatte aufgespannte Bau- und Funktionseinheit.

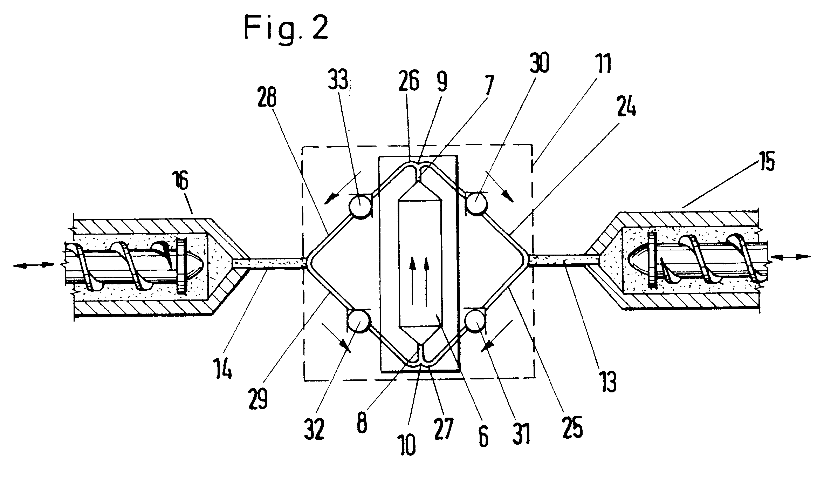

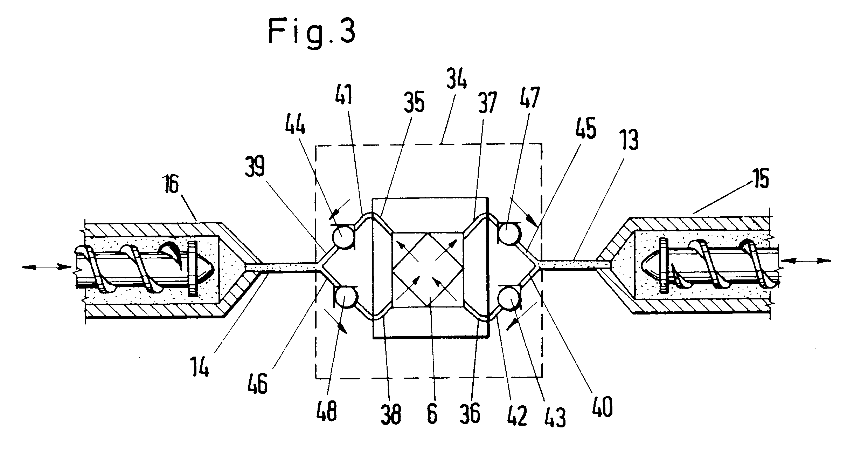

Die beiden Bohrungen 9 und 10 führen zu einer Ventilanordnung 12, die schematisch in Fig. 1 strichpunktiert dargestellt und deren erstes und zweites Ausführungsprinzip in den Fig. 2 und 3 dargestellt ist.

Von der Ventilanordnung 12 führen die weiteren Bohrungen 13 und 14 zu den Plastifizier- und Einspritzaggregaten 15 bzw. 16, mit denen sie in kommunizierender Verbindung stehen.

Mit 17 und 18 sind schematisch die hydraulischen und an sich bekannten Steuereinrichtungen der Plastifizier- und Einspritzaggregate und mit 19 das beiden gemeinsame elektrische Steuerteil dargestellt; die Plastifizier- und Einspritzschnecken sind mit 20 bzw. 21 bezeichnet.

Mit 22 bzw. 23 sind die Entlüftungsventile für die aus dem Formnest und den Angußbohrungen zu verdrängende Luft bezeichnet.

Während des Betriebs der Vorrichtung befindet sich vor der Spitze der beiden Plastifizier- und Einspritzschnecken 20, 21 plastifiziertes Material, das während des Füllens des Formnestes und des Verschiebens des einen plastifizierten Materials einen zusammenhängenden Massestrom bildet und aufgrund der vorgegebenen hydraulischen Drücke in den Spritzzylindern unter einem vorgegebenen Differenzdruck steht und mit entsprechender Geschwindigkeit in beiden Richtungen durch die Angußbohrungen 7, 8 und das Formnest 6 strömt.

Fig. 2 zeigt schematisch den Heißkanalblock 11 mit dem ersten Ausführungsprinzip der Ventilanordnung.

Mit Fig. 1 übereinstimmende Teile sind mit den gleichen Bezugszeichen bezeichnet.

Zur Vereinfachung ist die Anordnung der beiden Plastifizier- und Einspritzaggregate 15 und 16, von denen hier jeweils nur ihr Ausgangsbereich dargestellt ist, diametral einander gegenüberliegend dargestellt.

Der Heißkanalblock 11 ist strichliert dargestellt.

Von der weiteren Bohrung 13 führt eine Bohrung 24 zur Bohrung 9 und eine Bohrung 25 zur Bohrung 10, während von der weiteren Bohrung 14 eine Bohrung 28 ebenfalls zur Bohrung 9 und eine Bohrung 29 zur Bohrung 10 führt, wobei die Bohrungen 24 und 28 sowie 25 und 29 jeweils paarweise mit den Bohrungen 9 und 10 je einen Abzweig 26 bzw. 27 ausbilden.

In den Bohrungen 24 und 25 ist jeweils ein Einwegeventil 30 bzw. 31, die zueinander antiparallel geschaltet sind, angeordnet und in den Bohrungen 28 und 29 jeweils ein Einwegeventil 32 bzw. 33, die ebenfalls antiparallel geschaltet sind. Die Anordnung entspricht elektrotechnisch einer Vollweggleichrichterbrücke für Wechselstrom, wobei das Formnest 6 dem Gleichstromverbraucher entspricht.

Die Fig. 3 zeigt schematisch das zweite Ausführungsprinzip des Heißkanalblocks, der mit 34 bezeichnet ist. Gleiche Teile sind mit gleichen Bezugszeichen bezeichnet.

Die Spritzgießform, von der lediglich das Formnest 6 dargestellt ist, weist ein erstes Paar Angußbohrungen, die mit 35 und 36 bezeichnet sind, und ein zweites Paar Angußbohrungen, die mit 37 und 38 bezeichnet sind, auf.

Die beiden Angußbohrungen 35 und 36 liegen in einer zu den Angußbohrungen 37 und 38 parallelen Ebene.

Die Angußbohrungen 35 und 36 setzen sich in den Bohrungen 41 und 42 des Heißkanalblocks fort, in denen die Einwegventile 43 und 44 angeordnet sind und die in die weitere Bohrung 13 bzw. 14 münden.

Die Angußbohrungen 37 und 38 setzen sich in den Bohrungen 45 und 46 fort, in denen die Einwegventile 47 und 48 antiparallel geschaltet angeordnet sind und die ebenfalls in die weitere Bohrung 13 bzw. 14 münden.

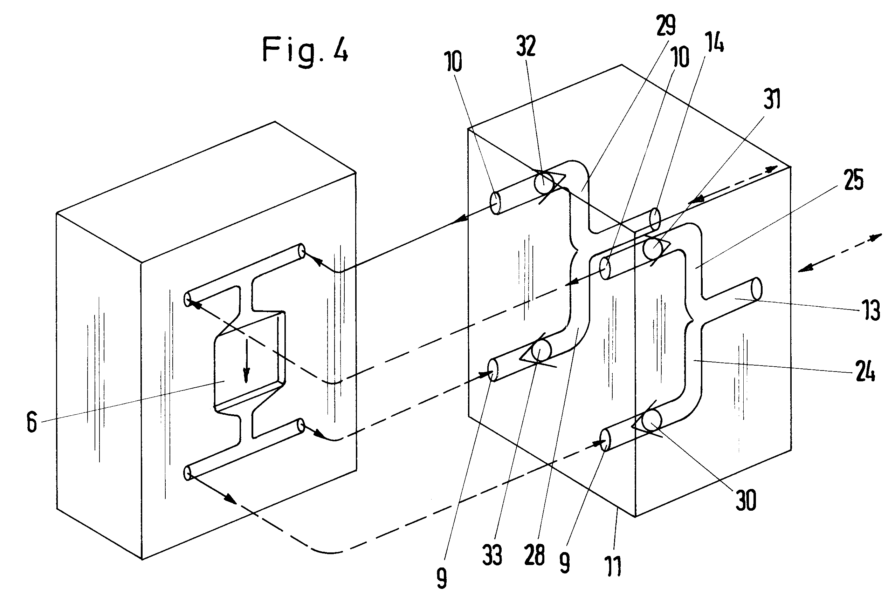

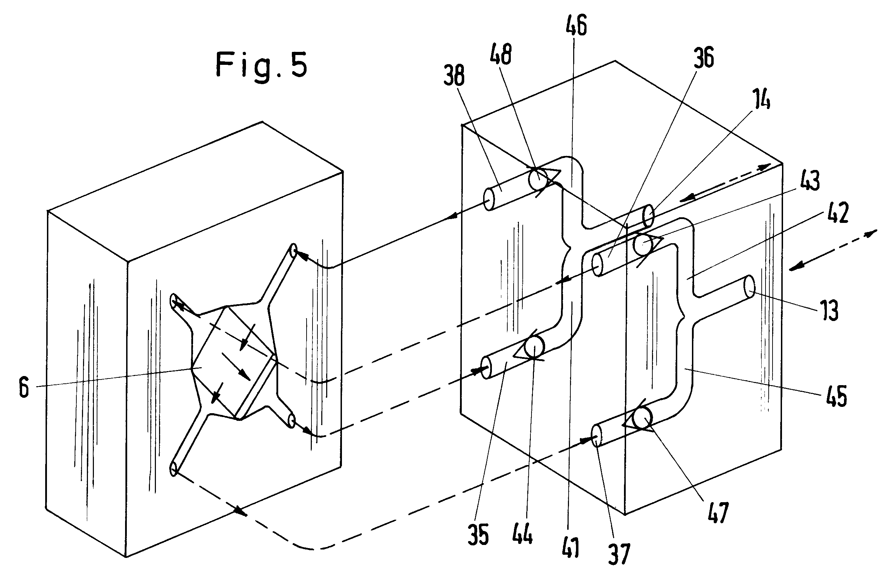

Die Fig. 4 und 5 zeigen noch einmal in Explosionsdarstellung die in Fig. 2 und 3 schematisch dargestellten Ausführungsbeispiele.

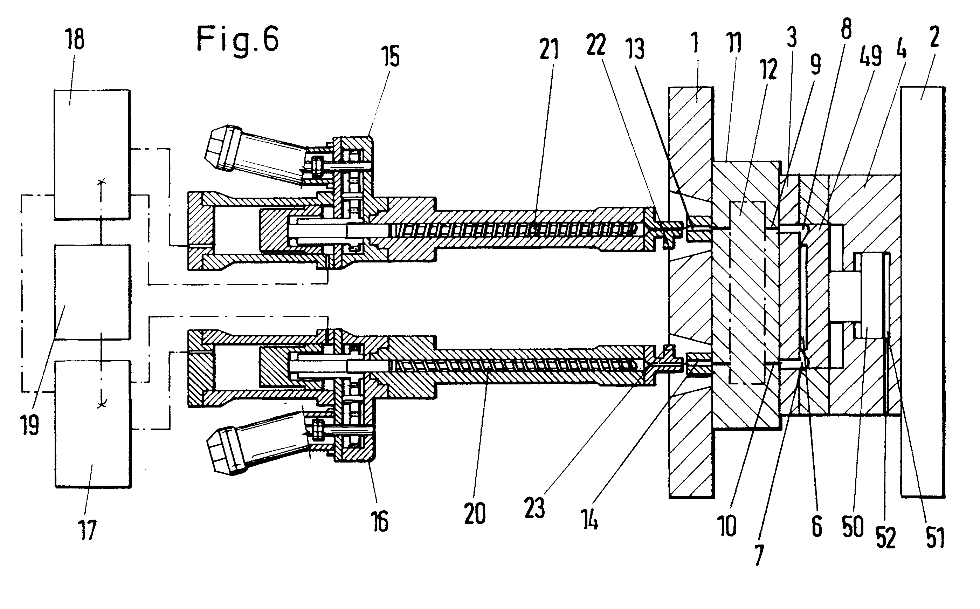

Die Fig. 6 zeigt ein mögliches Ausführungsbeispiel für eine Spritzgießform mit einem verfahrbaren, die Formteilkontur tragenden Kern. In der Formhälfte 4 ist der bewegliche Kern 49 mit einem hydraulischen Blockzylinder 50 verbunden, welcher über den Druckraum 51 vor Beginn des Formfüllvorganges über die Leitung 52 mit Druck beaufschlagt wird und dann während des wechselseitigen Spritzens der sich überlagernden Schichten in an sich bekannter Weise durch definiertes Ablassen des Ölvolumens im Druckraum 51 den Formhohlraum größer werden läßt.

## Patentansprüche

1. Spritzgießform (5) zum Herstellen von Spritzgußteilen aus plastifizierbarem Material, insbesondere aus plastifizierbaren Flüssigkristall-Polymeren, mit mindestens zwei Angußbohrungen (7, 8; 35 bis 38) und mindestens zwei weiteren, mit dem Ausgang je eines zugehörigen Plastifizier- und Einspritzaggregates (15, 16) verbindbaren Bohrungen (13, 14),
dadurch gekennzeichnet,
daß zwischen den Angußbohrungen (7, 8; 35 bis 38) und den weiteren Bohrungen (13, 14) ein Heißkanalblock (11, 34) mit mindestens zwei Bohrungen (9, 10; 24, 25, 28, 29; 41, 42, 45, 46) angeordnet ist, wobei diese Bohrungen (9, 10; 24, 25, 28, 29; 41, 42, 45, 46) einerseits jeweils mit einer der Angußbohrungen (7, 8; 35 bis 38) in Verbindung stehen und andererseits in mindestens eine der weiteren Bohrungen (13, 14) münden und dazwischen durch eine Ventilanordnung (12) mit Einwegventilen (30 bis 33; 43, 44, 47, 48) geführt sind, die eine wechselweise von einem der Plastifizier- und Einspritzaggregate (15, 16) zum anderen (16, 15) verlaufende Strömung des plastifizierten thermoplastischen Materials erzeugt.

2. Spritzgießform nach Anspruch 1,
dadurch gekennzeichnet,
daß der Heißkanalblock (11) einen ersten Abzweig (26) mit der einen, in die eine Angußbohrung (7) mündenden Bohrung (9) und einen zweiten Abzweig (27) mit der anderen, in die andere Angußbohrung (8) mündenden Bohrung (10) aufweist, wobei die Abzweige (26, 27) über die Bohrungen (24, 25; 28, 29) jeweils sowohl mit dem ersten als auch mit dem zweiten Plastifizier- und Einspritzaggregat (15, 16) in Verbindung stehen und die Einwegventile (30 bis 33) in diesen Bohrungen (24, 25; 28,29) angeordnet sind.

3. Spritzgießform nach Anspruch 1,
dadurch gekennzeichnet,
daß die Spritzgießform (5) zwei Paare von Angußbohrungen (35, 36 und 37, 38) aufweist, deren beide Achsen in zwei parallelen Ebenen angeordnet sind und in einer gemeinsamen Projektionsebene untereinander einen vorgegebenen Winkel einschließen, daß der Heißkanalblock (34) Bohrungen (41, 42 bzw. 45, 46) aufweist und daß diese Bohrungen (41, 42, 45, 46) einerseits in die Angußbohrungen (35 bis 38) und andererseits in die weiteren Bohrungen (13, 14) münden.

4. Spritzgießform nach einem der Ansprüche 1 bis 3,
dadurch gekennzeichnet,
daß bei mindestens einer der beiden Formhälften (4) die zur Formteilbildung notwendige Kontur mittels einer - vorzugsweise hydraulische betätigten - Kolben-Zylinder-Anordnung (49 bis 52) auf einen minimalen Abstand zur anderen Formhälfte (3) verfahrbar ist und der die Formteilkontur tragende Kern (49) in vorgegebener Weise kontinuierlich aus dieser Anfangslage zurückfahrbar ist, wobei mehrfach Fließrichtungswechsel des thermoplastischen Materials durchführbar sind.

5. Spritzgießform nach Anspruch 4,
dadurch gekennzeichnet,
daß die Querschnittsfläche des die Formkontur tragenden verfahrbaren Kerns (49) senkrecht zur Schließrichtung der Spritzgießform (5) größer ist als die für die Formteilbildung notwendige Kontur und die Konturen für die Angußkanäle (7, 8) beinhaltet.

## Claims

1. Injection mould (5) for the production of injection moulded articles from plastifiable material, in particular plastifiable liquid crystalline polymers, with at least two feed channels (7, 8; 35 through 38) and at least two more channels (13, 14), each being connectable with the nozzle of one of the plastifying and injection units (15, 16),
characterised in
that between the feed channels (7, 8; 35 through 38) and the other channels (13, 14), a hot runner block (11, 34) with at least two runners (9, 10; 24, 25, 28, 29; 41, 42, 45, 46) is interposed in such a way that its runners (9, 10; 24, 25, 28, 29; 41, 42, 45, 46) communicate with one of the feed channels (7, 8; 35 through 38) on the one hand and at least one of the other channels (13, 14) on the other hand, with a valve system (12) of non-return valves (30 through 33; 43, 44, 47, 48) installed between them and operating so as to produce a reciprocating flow of the molten thermoplastic material from one of the plastifying and injection units (15, 16) to the other (16, 15).

2. Injection mould according to claim 1,
characterised in
that the hot runner block (11) has a first branch channel (26) with the one bifurcation (9) leading into the one feed channel (7) and a second branch channel (27) with the other bifurcation (10) leading into the other feed channel (8), the two branch channels (26, 27) communicating, via the channels (24, 25; 28, 29), both with the first and the second plastifying and injection unit (15, 16), and the non-return valves (30 through 33) being installed in these channels (24, 25; 28, 29).

3. Injection mould according to claim 1,
characterised in
that the injection mould (5) has two pairs of feed channels (35, 36 and 37, 38) whose two axes are arranged in two parallel planes, enclosing between them a given angle in a given common plane of projection;
that the hot runner block (34) has the channels (41, 42 and 45, 46, respectively), and
that these runners (41, 42; 45, 46) communicate with the feed channels (35 through 38) on the one hand and the other channels (13, 14) on the other hand.

4. Injection mould according to any one of the claims 1 to 3,
characterised in
that in at least one of the two parts of the mould (4) the contour necessary to give the moulded article its shape can be shifted by a - preferably hydraulically operated - piston-cylinder device (49 through 52) towards the other part of the mould (3) so as to leave a minimum gap between the two parts of the mould, and that the plug (49) bearing the contour of the article to be moulded can be continuously shifted back from this initial position at a given rate, the flow of the thermoplastic material being several times changeable in direction.

5. Injection mould according to claim 4,
characterised in
that normal to the closing direction of the injection mould (5) the cross sectional area of the shiftable plug (49) bearing the contour of the article to be moulded is larger than the contour necessary for the article to be moulded, and that it also contains the contours of the feed channels (7,8).

## Revendications

1. Moule pour coulage à injection (5) pour la fabrication de pièces moulées par injection à partir de matières plastifiables, surtout polymères à propriétés de cristaux liquides, avec au moins deux canaux de carotte (7,8; 35 à 38) et aux moins deux autres canaux (13, 14) pouvant chacun être raccordé à la buse d'un des groupes de plastification et d'injection (15, 16), caractérisé en ce que
un bloc à canaux chauds (11, 34) avec aux moins deux canaux (9, 10; 24, 25, 28, 29; 41, 42, 45, 46) est disposé entre les canaux de carotte (7, 8; 35 à 38) et les autres canaux (13, 14), ces canaux (9, 10; 24, 25, 28, 29; 41, 42, 45, 46) communiquant chacun avec un des canaux de carotte (7, 8; 35 à 38) d'une part et débouchant dans un des autres canaux (13, 14) d'autre part, avec un système de soupapes (12) aux soupapes de non-retour (30 à 33; 44, 47, 48), installé dans les canaux, causant le courant de la matière thermoplastique fondue à alterner entre le groupe de plastification et d'injection (15, 16) et le groupe de plastification et d'injection (16, 15).

2. Moule pour coulage par injection selon la revendication 1,
caractérisé en ce que
le bloc à canaux chauds (11) présente une première dérivation (26) avec l'une bifurcation (9) débouchant dans te canal de carotte (7) et une deuxième dérivation (27) avec l'autre bifurcation (10) débouchant dans l'autre canal de carotte (8), les deux dérivations (26, 27) communiquant, par les canaux (24, 25; 28, 29), tant avec le premier qu'avec le deuxième groupe de plastification et d'injection (15, 16), les soupapes de non-retour (30 à 33) étant installées dans les canaux (24, 25; 28, 29).

3. Moule pour coulage par injection selon la revendication 1,
caractérisé en ce que
le moule d'injection (5) présente deux paires de canaux de carotte (35, 36; 37, 38) dont les deux axes sont disposés sur deux plaines parallèles, de manière à enfermer entre eux un angle donné sur une plaine de projection commune;
que le bloc à canaux chauds (34) présente les canaux (41, 42; 45, 46) et que ces canaux (41, 42; 45, 46) communiquent avec les canaux de carotte (35 à 38) d'une part et débouchent dans les autres canaux (13, 14) d'autre part.

4. Moule pour coulage à injection selon l'une quelconque des revendications 1 à 3,
caractérisé en ce que
dans au moins un des deux demi-moules (4), le contour de l'objet à couler peut, moyennant un système de cylindres et pistons (49 à 52), de préférence à actionnement hydraulique, être rapproché de l'autre demi-moule (3) jusqu'à ne laisser qu'un écart minimum entre les deux demi-moules, et que le bouchon (49) portant le contour de la pièce à mouler peut être retiré continuellement, à une vitesse donnée, à partir de cette position de départ, le sens du courant de la matière thermoplastique pouvant être inversé à plusieures reprises.

5. Moule pour coulage à injection selon la revendication 4,
caractérisé en ce que
le bouchon déplaçable (49) portant le contour de la pièce à mouler présente une superficie plus grande, en sens perpendiculaire sur la direction de fermeture du moule d' injection (5), que le contour nécessaire à la formation de la pièce à mouler, et qu'il s'y trouve aussi les contours des canaux de carotte (7, 8).
